Europäisches Patentamt

European Patent Office

Office européen des brevets

(11) Numéro de publication: **0 259 554**
**A2**

(12) **DEMANDE DE BREVET EUROPEEN**

(21) Numéro de dépôt: **87109453.8**

(22) Date de dépôt: **01.07.87**

(51) Int. Cl.⁴: **G11B 23/027**

(30) Priorité: **09.09.86 CH 3614/86**

(43) Date de publication de la demande:
**16.03.88 Bulletin 88/11**

(84) Etats contractants désignés:
**AT BE DE FR GB NL SE**

(71) Demandeur: **GEFITEC S.A.**
**Avenue de la Gare, 5 Case postale 452**
**CH-1001 Lausanne 1(CH)**

(72) Inventeur: **Posso, Patrick Pierre Philippe**
**Avenue de la Gare 5**
**CH-1001 Lausanne 1(CH)**

(74) Mandataire: **Meylan, Robert Maurice et al**
**c/o BUGNION S.A. 10, route de Florissant**
**Case Postale 375**
**CH-1211 Genève 12 - Champel(CH)**

(54) **Bague de cerclage et de stockage pour bobine de ruban d'enregistrement.**

㊹ La bague comprend une bande en matière flexible extensible (1) destinée à entourer une bobine. Elle est munie de moyens de fermeture comprenant une boucle (3) venue d'une pièce avec un crochet de suspension (5) et fixée rigidement à l'une des extrémités de la bande (1), cette boucle venant s'accrocher sur un bossage (4) formé sur l'autre extrémité de la bande (1), la boucle présentant une ouverture (10) entourant le bossage, tandis que ses côtés présentent des moyens de préhension. La bande peut comprendre en outre un bossage de protection (17) situé très près de l'extrémité de la boucle (3) ou, selon une variante, l'extrémité de la boucle (3) présente une face frontale oblique empêchant un accrochage accidentel de la boucle.

**Fig.1**

## Bague de cerclage et de stockage pour bobine de ruban d'enregistrement

La présente invention a pour objet une bague de cerclage et de stockage pour bobine de ruban d'enregistrement destinée à être utilisée avec une bobine comprenant un moyeu et une paire de flasques parallèles circulaires, cette bague comprenant une bande en matière flexible extensible munie sur l'une de ses faces de nervures longitudinales destinées à s'engager de part et d'autre des flasques de la bobine et munie d'un crochet de suspension, et de moyens de fermeture et de tension comprenant une boucle solidaire de l'une des extrémités de la bande et d'un bossage solidaire de l'autre extrémité de la bande, sur lequel vient s'accrocher ladite boucle, sous tension.

On connaît plusieurs bagues de ce type qui comprennent toutes une boucle articulée sur la bande. Parmi les bagues commercialisées on citera à titre d'exemple la bague décrite dans le brevet US 3 696 935 comprenant une boucle articulée sur un bossage de la bande par l'intermédiaire d'une biellette venue d'une pièce avec la boucle, cette boucle venant s'accrocher sur un bossage venu d'une pièce avec le crochet de suspension fixé sur l'autre extrémité de la bande. L'ouverture de la boucle s'effectue du côté de la biellette et un bossage de protection est situé en face de cette extrémité de la boucle dans le but d'empêcher une ouverture intempestive de la boucle par accrochage accidentel lors de la manipulation de la bobine. Une certaine distance doit être toutefois laissée entre l'extrémité de la boucle et le bossage de protection pour permettre l'introduction du doigt pour soulever l'extrémité de la boucle pour l'ouverture de celle-ci. Dans une autre exécution décrite dans le brevet US 4 388 991, la boucle est munie d'une barrette par laquelle elle est retenue et articulée sur la bande par une pièce comportant le crochet de suspension. Un bossage de protection est également prévu en face de l'extrémité de la boucle. Dans toutes ces exécutions connues, la boucle est articulée et le bossage de protection est situé à une distance suffisante de la boucle pour permettre son soulèvement au moyen d'un doigt. Le bossage de protection empêche certes dans la majorité des cas d'accrocher un obstacle avec l'extrémité de la boucle et de provoquer une ouverture accidentelle de la bague et par conséquent une chute de la bobine, mais les risques d'accrochage accidentel de l'extrémité de la boucle sont encore élevés en raison de l'espace nécessaire entre l'extrémité de la boucle et le bossage de protection.

L'invention a pour but de réduire le risque d'ouverture accidentel de la bague par accrochage de l'extrémité de la boucle, tout en simplifiant la construction de cette boucle.

A cet effet la bague de cerclage et de stockage selon l'invention est caractérisée par le fait que la boucle est venue d'une pièce avec le crochet de suspension, qu'elle est fixée rigidement à la bande, qu'elle présente une ouverture entourant le bossage auquel elle est accrochée et que ses côtés présentent des moyens de préhension.

La boucle entoure le bossage auquel elle est accrochée sans le recouvrir. Il est ainsi possible d'ouvrir la boucle en la saisissant par ses côtés entre le pouce et le majeur et en retenant le bossage d'accrochage avec l'index.

Etant donné que la boucle ne doit plus être soulevée par son extrémité, cette extrémité peut être terminée par une face frontale inclinée dont le bord inférieur vient en contact avec la bande, de telle sorte que le bossage de protection devient superflu.

Dans le cas où le bossage de protection est conservé, il peut être situé très près de l'extrémité de la boucle et même de telle sorte que l'extrémité de la boucle vient presque en contact avec le bossage de protection. Un accrochage de l'extrémité de la boucle est par conséquent pratiquement exclu.

On connaît d'autre part des bagues de cerclage dans lesquelles la boucle et venue d'une pièce avec la bande (US 3 095 969, 3 227 269 et 3 939 977). Une telle solution semble simplifier la fabrication, mais les exigences différentes quant à l'élasticité et la souplesse en ce qui concerne la bande et la boucle sont difficilement conciliables, même si l'on prévoit une nervure de raidissement (US 3 227 269). En outre, dans ces exécution, la boucle s'ouvre également par l'extrémité et la présence d'un bossage de protection tel que prévu dans l'une des ces exécutions (US 3 939 277) pose les mêmes problèmes que dans les bagues à boucle rapportée.

L'utilisation d'un seul élément rapporté, constituant simultanément la boucle de fermeture et le crochet de suspension, permet d'avoir une bande souple et élastique et un crochet et une boucle rigide permettant d'assurer une bonne fermeture sous tension de la bague et une suspension solide. La fixation de l'élément rapporté est réalisé de préférence comme décrit dans le brevet français 2 565 393, c'est-à-dire en deux points, l'un à baïonnette et l'autre à téton fendu.

Le dessin annexé représente, à titre d'exemple, deux formes d'exécution de l'invention.

La figure 1 est une vue partielle de la bague de cerclage et de stockage, en coupe selon I-I de la figure 2, selon une première forme d'exécution.

La figure 2 est une vue en plan, de dessus, de la même partie de bague.

La figure 3 est une vue analogue à la figure 1 d'une second forme d'exécution selon une coupe III-III de la figure 4.

La figure 4 est une vue en plan, de dessus, de la partie de bague représentée à la figure 3.

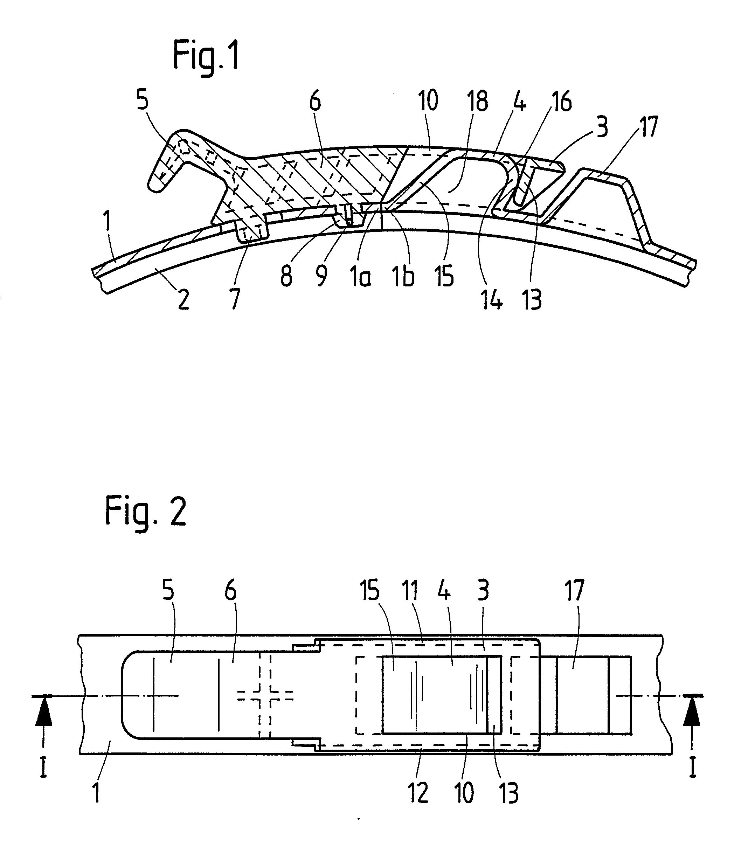

La bague de cerclage et de stockage représentée aux figures 1 et 2 est constituée d'une bande 1 en matière flexible légèrement élastique, par exemple du polyéthylène, munie sur sa face intérieure de deux paires de nervures parallèles 2 entre lesquelles viennent s'engager les flasques de la bobine de manière bien connue. Dans la position fermée représentée au dessin, les deux extrémités 1a et 1b de la band 1 se rejoignent sous l'effet de la tension d'une boucle de fermeture 3 qui vient s'accrocher sur un bossage d'accrochage 4 formé dans la bande 1.

La boucle 3 est venue d'une pièce avec un crochet de suspension 5 en un matériau relativement rigide, par exemple en acrylonitril-butadiène-styrène , de manière à assurer une tension sur la bande 1. Le corps 6 portant la boucle 3 et le crochet 5 est fixé sur la bande 1 au moyen d'un système à baïonnette 7 et à téton fendu 8 comme décrit dans le brevet français 2 565 393. Comme décrit dans ce brevet antérieur, le téton fendu 8 est verrouillé par un plot 9 introduit dans la fente du téton fendu. La pièce 6 est donc fixée de façon tout à fait rigide à la bande 1.

La boucle 3 présente une découpe rectangulaire 10 qui entoure le bossage d'accrochage 4 et deux ailes latérales verticales et parallèles 18 venant de chaque côté du bossage 4. La boucle 3 est destinée à être saisie latéralement et présente à cet effet des moyens de préhension constitués ici par des rebords légèrement saillants 11 et 12 de sa face supérieure. La boucle présente en outre, près de son extrémité, une paroi transversale 13 légèrement dirigée vers l'arrière de la boucle, venant s'appuyer contre la paroi frontale 14 du bossage d'accrochage 4, inclinée en direction de l'extrémité de la boucle 3. De l'autre côté, le bossage d'accrochage 4 présente une paroi en forme de plan incliné 15 destiné à faciliter le passage de la boucle 3 par dessus le bossage d'accrochage 4. L'extrémité 16 du bossage d'accrochage 4 située du côté de l'extrémité de la boucle 3 est arrondie de manière à permettre la tension et la fermeture de la bague par simple pression sur la boucle.

La bande 1 présente en outre un bossage de protection 17, formé par moulage dans la bande, destiné à protéger la bague contre une ouverture intempestive de la boucle 3 par accrochage accidentel de son extrémité. Cette extrémité n'étant normalement pas utilisée pour ouvrir la boucle 3, le bossage de protection 17 peut être situé très près de l'extrémité de la boucle 3. La distance entre la boucle 3 et le bossage de protection 17 est de préférence inférieur ou égal à 2mm, de telle sorte que les risques d'accrochage accidentel de l'extrémité de la boucle sont pratiquement nuls. La face supérieure du bossage de protection est située au moins à niveau avec la face supérieure de la boucle 3.

Pour fixer la bague de cerclage autour d'une bobine, on place tout d'abord la bande 1 autour de la bobine sans s'occuper de la boucle 3. Lorsque les extrémités 1a et 1b de la bande 1 se rapprochent, le bord inférieur de la paroi transversale 13 de la boucle 3 vient buter contre le plan incliné 15 du bossage d'accrochage 4 et glisse sur ce bossage pour arriver dans la partie supérieure de la partie arrondie 16. Il suffit alors d'exercer une pression sur la boucle 3 pour que l'extrémité inférieure de sa paroi 13 glisse sur la partie arrondie 16 en tendant la bande 1 et vienne ensuite s'appuyer contre la face oblique 14 du bossage d'accrochage en retrait de l'extrémité inférieure de la partie arrondie 16

Pour ouvrir la bague de cerclage, il suffit de saisir latéralement la boucle 3 entre le pouce et le majeur et de soulever cette boucle en retenant le bossage 4 avec l'index.

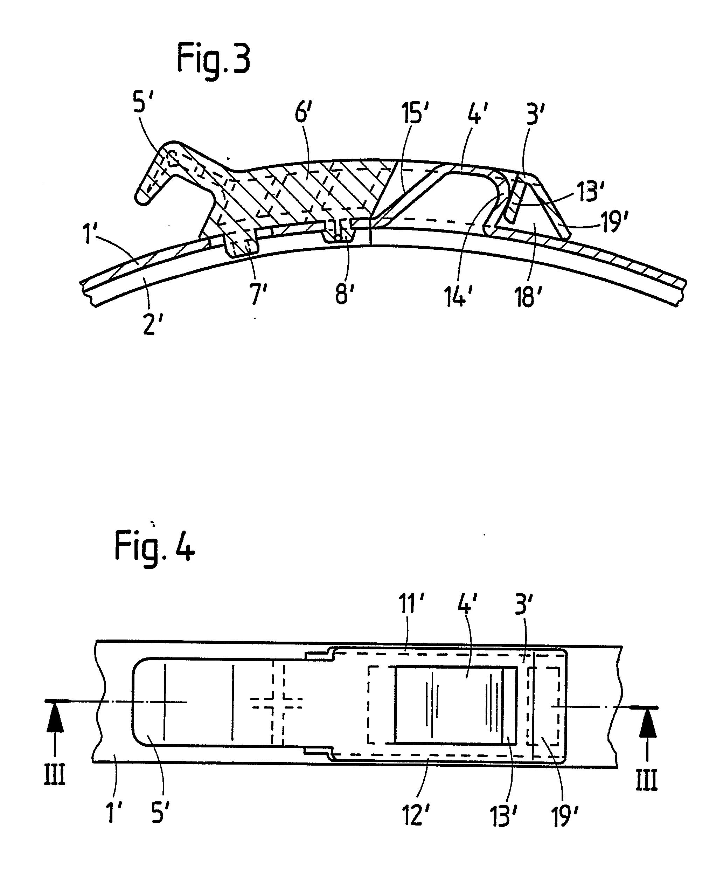

Une seconde forme d'exécution est représentée aux figures 3 et 4. De nombreuses caractéristiques de cette seconde forme d'exécution étant identiques à celles de la première forme d'exécution, les parties identiques ont été désignées par les mêmes références accompagnées du signe , de telle sorte qu'une répétition de la description détaillée de ces parties de ces parties est superflue. Cette seconde forme d'exécution se décrira plus facilement par les différences qu'elle présente relativement à la première forme d'exécution. Cette seconde forme d'exécution diffère de la première forme d'exécution par l'absence du bossage de protection 17. Celui-ci n'est plus nécessaire car l'extrémité de la boucle 3' présente une face frontale 19 inclinée en formant un angle obtus avec la surface de la bande 1'. L'extrémité inférieure de cette face frontale inclinée 19 vient en contact avec la bande 1'. Si l'on vient buter contre un obstacle avec la partie de la bande 1' située devant la boucle 3' ou avec la face frontale 19, l'obstacle glissera sur cette face frontale 19 sans accrocher la boucle 3'. Etant donné que les parois latérales 18' de la boucle 3' s'étendent jusqu'à l'extrémité 19, un accrochage latéral accidentel de la boucle est également exclu.

**Revendications**

1. Bague de cerclage et de stockage pour bobine de ruban d'enregistrement destinée à être utilisée avec une bobine comprenant un moyeu et une paire de flasques parallèles circulaires, cette bague comprenant une bande en matière flexible extensible (1) munie sur l'une de ses faces de nervures longitudinales (2) destinées à s'engager de part et d'autre des flasques de la bobine et munie d'un crochet de suspension (5), et de moyens de fermeture et de tension comprenant une boucle (3) solidaire de l'une des extrémités de la bande et d'un bossage (4) solidaire de l'autre extrémité de la bande, sur lequel vient s'accrocher ladite boucle, sous tension, caractérisée par le fait que ladite boucle (3) est venue d'une pièce avec le crochet de suspension (5), qu'elle est fixée rigidement à la bande (1), qu'elle présente une ouverture (10) entourant le bossage (4) auquel elle est accrochée et que ses côtés présentent des moyens de préhension (11, 12).

2. Bague de cerclage selon la revendication 1, comprenant un bossage de protection (17) situé en arrière du bossage d'accrochage (4) et de hauteur sensiblement égale à la hauteur de la boucle fermée, destiné à réduire les risques d'ouverture accidentelle de la boucle, caractérisée par le fait que la distance entre l'extrémité de la boucle (3) et le bossage de protection (17) est inférieur à 2mm.

3. Bague de cerclage selon la revendication 1, caractérisée par le fait que l'extrémité de la boucle (3') présente une face frontale (19) inclinée formant un angle obtus avec la bande.

**Fig.1**

**Fig. 2**

## Fig.3

5' 6' 15' 4' 3'
13'
19'
1'
7' 8' 14' 18'
2'

## Fig.4

11' 4' 3'
III
III
1' 5'
12' 13' 19'